# EUROPEAN PATENT APPLICATION

(11) **EP 4 534 944 A1**
(43) Date of publication of application: **09.04.2025**
(21) Application number: 23823171.6
(22) Date of filing: 14.06.2023
(51) Int. Cl.: F28F 9/16, F28F 9/18, F28F 9/04, F28F 21/08

(54) **EFFICIENT HEAT EXCHANGER**

(30) Priority: 15.06.2022 CN 202210672437
(71) Applicant: Shaoxing Yongfeng Energy Saving Technology Co., Ltd, Shaoxing, Zhejiang 312030 (CN)
(72) Inventor: LAO, Guanming, Shaoxing, Zhejiang 312030 (CN)
(74) Representative: Wächter, Jochen
(86) International application number: PCT/CN2023/100089
(87) International publication number: WO 2023/241604

(57) **Abstract**

The present invention relates to the technical field of heat exchangers. Disclosed is an efficient heat exchanger. The efficient heat exchanger comprises: a shell; a group of tube sheets, which are installed in the shell and are uniformly provided with tube holes; and a plurality of heat exchange tubes, which are installed between two tube sheets and are respectively in communication with corresponding tube holes, wherein some or all of the heat exchange tubes are thin metal tubes with a wall thickness not greater than 1 mm, connecting tube sleeves are inserted into two ends of each thin metal tube, and the connecting tube sleeves at the two ends are fixed to corresponding tube holes of corresponding tube sheets by means of welding or in an expanded joint mode through tube expanders. The present invention provides the efficient heat exchanger, in which some or all of the heat exchange tubes are thin metal tubes with a wall thickness not greater than 1 mm and the tube sheets can also use thin walls, and therefore the efficient heat exchanger can reduce material cost and improve heat exchange efficiency.

## Description

### TECHNICAL FIELD

The present disclosure relates to an efficient heat exchanger, and belongs to the technical field of heat exchangers.

### BACKGROUND

Tube sheet heat exchangers are heat exchange equipment commonly used in the printing and dyeing industry. At present, heat exchange tubes of a heat exchanger are fastened to tube sheets by the method of generally passing the heat exchange tubes through holes in the tube sheets, and using a tube expander to expand the portions of the heat exchange tubes connected to the tube sheets through mechanical force so as to fasten the heat exchange tubes to the tube sheets or fixing the heat exchange tubes to the tube sheets by welding. However, whether using an expanded joint mode through a tube expander or by welding, walls of the heat exchange tubes need to have a certain thickness. If the walls of the heat exchange tubes are too thin, it is easy to burn through the heat exchange tubes during welding; in the process of using the tube expander to expand the heat exchange tubes, the walls of the heat exchange tubes will become even thinner due to expansion, which will result in reduction in connection strength or cracking of the heat exchange tubes due to expansion. Therefore, the walls of the existing heat exchange tubes need to be or greater than 1.5 mm to ensure that the heat exchange tubes are fixedly connected to the tube sheets normally. Due to the thick walls of the heat exchange tubes, the material cost is increased while the heat exchange efficiency is reduced. Moreover, the heat exchange tubes with thick walls are heavy, and the number of the heat exchange tubes connected to the tube sheets reaches dozens to hundreds, so the tube sheets need to bear great weight, and accordingly thick walls are required for avoiding deformation of the tube sheets.

### SUMMARY

The technical problem to be solved by the present disclosure is to provide an efficient heat exchanger, in which some or all of the heat exchange tubes are thin metal tubes with a wall thickness not greater than 1 mm and the tube sheets may have thin walls, and therefore the material cost can be reduced, the heat exchange efficiency can be improved, and the deficiency of the prior art can be overcome.

The technical solution of the present disclosure is that an efficient heat exchanger includes a shell, a group of tube sheets installed in the shell and uniformly provided with tube holes, and multiple heat exchange tubes installed between each two of the group of tube sheets and respectively in communication with corresponding tube holes, where some or all of the heat exchange tubes are thin metal tubes with a wall thickness not greater than 1 mm, connecting tube sleeves are inserted at two ends of each thin metal tube, and the connecting tube sleeves at the two ends are fixed to corresponding tube holes of corresponding tube sheets by welding or in an expanded joint mode through a tube expander.

Further, some of the heat exchange tubes are thick metal tubes with a wall thickness not greater than 1.5 mm, and two ends of each thick metal tube are fixed to corresponding tube holes of corresponding tube sheets by welding or in the expanded joint mode through the tube expander for support between the tube sheets.

Further, after each of the connecting tube sleeves is fixed to a corresponding one of the tube sheets, one end of the connecting tube sleeve connected to the thin metal tube is located on an inner side of the tube sheet, and the thin metal tube is in internal socket connection or external socket connection with the connecting tube sleeve.

Further, a joint surface between the connecting tube sleeve and the thin metal tube that are in socket fit is a conical surface for guiding.

Further, an other end of the connecting tube sleeve comprises an outer flange, and the outer flange is stopped at an outer side of the tube sheet when the connecting tube sleeve is inserted into a corresponding one of the tube holes of the tube sheet.

Further, each of the heat exchange tubes is a helical tube with both inner and outer walls being extruded, and two ends of the helical tube are joints without being extruded helically.

Further, multiple partitions among the heat exchange tubes are installed in the shell, and the multiple partitions guide a medium outside the heat exchange tubes and deliver the medium serpentinely.

Compared with the conventional art, some embodiments have the following technical effects.

In implementation of the present disclosure, some or all of the heat exchange tubes of the heat exchanger are thin metal tubes with a wall thickness not greater than 1 mm, two ends of each of the thin metal tubes are in socket connection with the connecting tube sleeves that are fixed to corresponding tube holes of corresponding tube sheets by means of welding or in expanded joint mode through a tube expander to achieve installation; the thin metal tubes are not directly welded or expanded by means of the tube expander and accordingly will not be burnt through or cracked; therefore, the material cost is reduced while the heat exchange efficiency is improved without affecting the normal use.

### BRIEF DESCRIPTION OF THE DRAWINGS

To illustrate the technical solutions in the embodiments of the present disclosure or conventional art more clearly, the accompanying drawings required for the embodiments are briefly described below. Apparently, the accompanying drawings in the following description show merely some embodiments of the present disclosure, and those of ordinary skill in the art may still derive other accompanying drawings from these accompanying drawings without creative efforts.
FIG. 1 is a structural schematic diagram of the present disclosure;
FIG. 2 is an enlarged view of part B in FIG. 1;
FIG. 3 is a schematic diagram of external socket connection between a heat exchange tube and a connecting tube sleeve;
FIG. 4 is a schematic diagram of internal socket connection between a heat exchange tube and a connecting tube sleeve;
FIG. 5 is a first schematic diagram of a connecting tube sleeve;
FIG. 6 is a second schematic diagram of a connecting tube sleeve;
FIG. 7 is a third schematic diagram of a connecting tube sleeve.

Reference signs: 1, 1a tube sheets; 2 shell; 3 thin metal tube; 4 connecting tube sleeve; 5 inner wall surface; 6 outer wall surface; 7 outer flange; 8 partition; 9 cold air inlet; 10 cold air outlet; 11hot air inlet; 12 hot air outlet; 13 tube hole fitting section; and 14 stop position.

### DETAILED DESCRIPTION OF THE EMBODIMENTS

The technical solutions in the embodiments of the present disclosure will be clearly and completely described below in conjunction with the accompanying drawings in the embodiments of the present disclosure. Apparently, the embodiments described are merely some rather than all of the embodiments of the present disclosure. On the basis of the embodiments in the present disclosure, all the other embodiments that would have been obtained by those of ordinary skill in the art without involving any inventive effort shall fall within the scope of protection of the present disclosure.

### Embodiment 1:

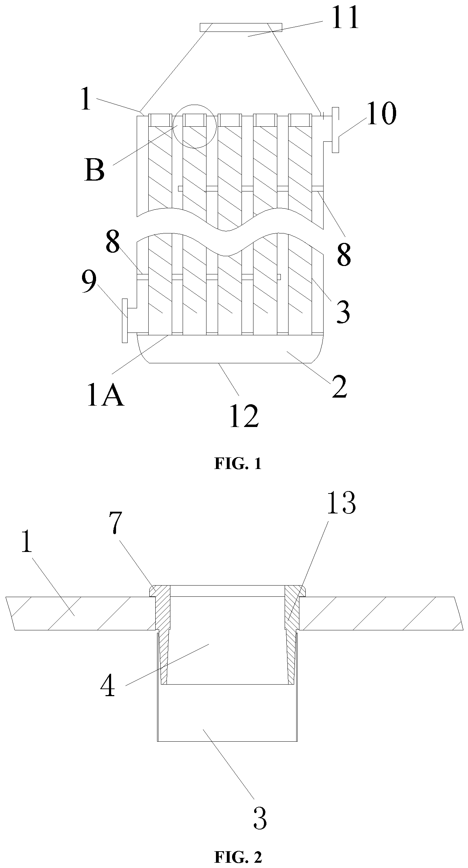

As shown in FIGS. 1 to 2, this embodiment provides an efficient heat exchanger including a shell 2. The shell 2 is provided with a cold air inlet 9, a cold air outlet 10, a hot air inlet 11, and a hot air outlet 12. A group of tube sheets 1, 1A provided with evenly distributed tube holes are installed in the shell 2, and multiple heat exchange tubes are installed between the two tube sheets 1, 1A, respectively, and are in communication with corresponding tube holes. During use, external cold air entering from the cold air inlet 9 of the shell 2, is delivered outside the heat exchange tubes and discharged from the cold air outlet 10, and high-temperature hot air entering from the hot air inlet 11 of the shell 2, passes through the heat exchange tubes 3 and then is discharged from the hot air outlet 12. When the high-temperature hot air is delivered inside the heat exchange tubes, it is in heat exchange with cold air outside the heat exchange tubes, and then the temperature of the high-temperature hot air is lowered while the temperature of the cold air is increased. The heat exchange tubes used in this embodiment are each a thin metal tube 3 with a wall thickness not greater than 1 mm, the wall thickness of the thin metal tube 3 is 0.2 to 0.5 mm properly, and the thin metal tube may be made of stainless steel, copper, aluminum, titanium, and other materials, where the stainless steel material with a wall thickness of 0.35 mm is the optimum. Two ends of the thin metal tube 3 are each inserted with a connecting tube sleeve 4, and the connecting tube sleeves 4 at the two ends are fixed to corresponding tube holes of the tube sheets 1, 1A by means of welding or in an expanded joint mode through a tube expander. The use of the thin metal tube 3 leads to a lower material cost, and moreover, the heat exchange efficiency is improved by expanding the heat exchange area per unit cross-sectional area. Since the two ends of each of the thin metal tubes are in socket connection with the connecting tube sleeves 4 that are fixed to the corresponding tube holes of the tube sheets 1, 1A by means of welding or in expanded joint mode through the tube expander to achieve installation, the thin metal tube 3 is not directly welded or expanded by means of the tube expander and accordingly will not be burnt through or cracked Moreover, the thin metal tube 3 with a thin wall is light, so the walls of the tube sheets 1, 1A may be thinned, and the tube sheets are less prone to deformation when their wall thickness is 10 mm. However, the wall thickness of the tube sheets in the prior art is not less than 20 mm.

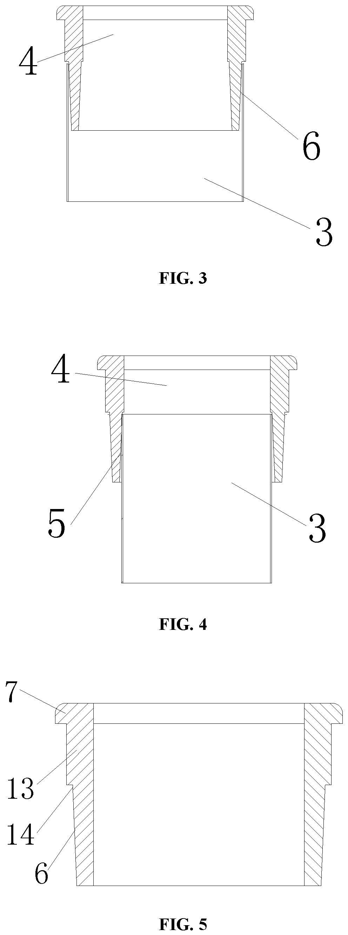

Preferably, as shown in FIGS. 3 and 4, after the connecting tube sleeves 4 are fixed onto the tube sheets 1, 1A, one end of the connecting tube sleeve connected to the thin metal tube 3 is located on the inner side of each of the tube sheets 1, 1A, the connecting tube sleeve 4 exceeds the inner side of each of the tube sheets 1, 1A by a certain length, the thin metal tube 3 is in internal socket connection or external socket connection with the connecting tube sleeve 4 according to needs, and thus a more flexible connection is achieved.

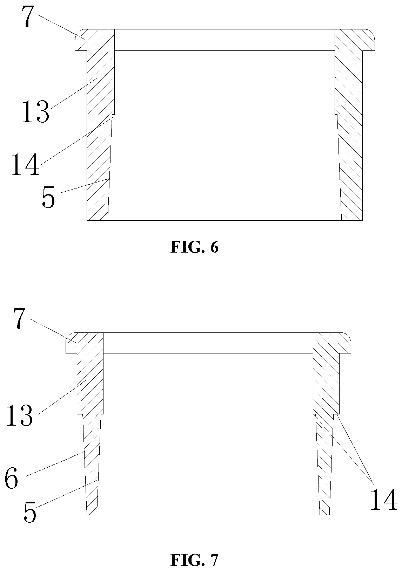

Preferably, at least one of an inner wall surface 5 and an outer wall surface 6 at the joint between the connecting tube sleeve 4 and the thin metal tube 3 is a guide conical surface, which may be, as shown in FIG. 5, the outer wall surface 6 of the joint between the connecting tube sleeve 4 and the thin metal tube 3 is a guide conical surface, as shown in FIG. 6, the inner wall surface 5 of the joint between the connecting tube sleeve 4 and the thin metal tube 3 is a guide conical surface; and as shown in FIG. 7, both the inner wall surface 5 and the outer wall surface 6 of the joint between the connecting tube sleeve 4 and the thin metal tube 3 are guide conical surfaces that play a role in guiding in the internal socket connection or external socket connection between the connecting tube sleeve and the thin metal tube 3 so as to facilitate alignment and fitting in connection. Air to air heat exchange is a basic mode in the printing and dyeing industry, which does not require a high airtightness, and thus the connecting tube sleeve 4 and the thin metal tube 3 can be subjected to socket connection directly. Alternatively, the joint between the connecting tube sleeve 4 and the thin metal tube 3 may be bonded with adhesive in order to improve the airtightness.

Preferably, the other end of the connecting tube sleeve 4 includes an outer flange 7, the middle section of the connecting tube sleeve 4 is a tube hole fitting section 13, and a stepped stop position 14 is formed between the tube hole fitting section 13 and the guide conical surface. When the connecting tube sleeve 4 is connected to the tube hole of a corresponding one of the tube sheets 1, 1A through the tube hole fitting section 13 in the middle, the outer flange 7 is stopped at the outer side of the corresponding one of the tube sheets 1, 1A, and the stop position 14 may be used for stopping the thin metal tube 3, so that the connecting tube sleeve 4 may be disposed at a specific position of the tube hole in the corresponding one of the tube sheets 1, 1A, which facilitates precise arrangement of the connecting tube sleeve 4 for subsequently welding or fixing in an expanded joint mode through the tube expander.

Preferably, the thin metal tube 3 is a helical tube with both the inner and outer walls being extruded, the tube walls are extruded to form a helix, two ends of the helical tube are joints without being extruded helically and matched with the connecting tube sleeves 4, which are easy to be tightly connected to the connecting tube sleeves 4. The use of the helical tube may expand the heat exchange area on the one hand, and on the other hand, may further improve the heat exchange efficiency of media inside and outside the tubes as the media will cause disturbances when passing through, resulting in rotational circulation.

Preferably, multiple partitions 8 among the thin metal tubes 3 are installed in the shell 2, and the multiple partitions 8 guide a medium outside the thin metal tubes 3 and deliver the medium serpentinely, so that the distance and time of heat exchange of the medium in the heat exchanger are extended, and the heat exchange efficiency is improved. In addition, the partitions 8 also have a reinforcing effect on the thin metal tubes 3.

### Embodiment 2:

In this embodiment, some of the heat exchange tubes are thick metal tubes with a wall thickness of not less than 1.5 mm, and two ends of the thick metal tube are directly welded or fixed to the corresponding tube holes of the tube sheets 1, 1A in an expanded joint mode through a tube expander. As the number of the heat exchange tubes in the heat exchanger usually reach dozens or even hundreds, the tube sheets 1, 1A are provided with full of tube holes. If the tube sheets 1, 1A are not supported, they will be deformed due to insufficient strength. If all of the heat exchange tubes used are thin metal tubes 3, they cannot play a role in supporting, because the thin metal tubes are not strong enough on their own and are only in socket connection with the connecting tube sleeves 4 between the tube sheets 1, 1A. In this embodiment, some of the heat exchange tubes are thick metal tubes with a wall thickness of not less than 1.5 mm, and the thick metal tubes are fixed to the corresponding tube holes of the tube sheets 1, 1A in an expanded joint mode through the tube expander, they can play a role in supporting the tube sheets 1, 1A to prevent the tube sheets from deforming. The number of the thick metal tubes need not be large, the number and connection positions may be selected according to the actual needs, for example, there are totally 100 heat exchange tubes, which may include 4 thick metal tubes and 96 thin metal tubes 3, where the 4 thick metal tubes are installed in the four corners of the tube sheets 1, 1A. The rest structures are the same as that in Embodiment 1 and will not be repeated.

The above is only a better implementation of the present disclosure, and any equivalent changes or modifications made in accordance with the structure, features and principles described in the scope of the patent application of the present disclosure are included in the scope of the patent application of the present disclosure.

## Claims

1. An efficient heat exchanger, comprising: a shell, a group of tube sheets installed in the shell and uniformly provided with tube holes, and a plurality of heat exchange tubes installed between each two of the group of tube sheets and respectively in communication with corresponding tube holes, **characterized in that** some or all of the heat exchange tubes are thin metal tubes with a wall thickness not greater than 1 mm, connecting tube sleeves are inserted at two ends of each thin metal tube, and the connecting tube sleeves at the two ends are fixed to corresponding tube holes of corresponding tube sheets by welding or in an expanded joint mode through a tube expander.

2. The efficient heat exchanger of claim 1, wherein some of the heat exchange tubes are thick metal tubes with a wall thickness not greater than 1.5 mm, and two ends of each thick metal tube are fixed to corresponding tube holes of corresponding tube sheets by welding or in the expanded joint mode through the tube expander for support between the tube sheets.

3. The efficient heat exchanger of claim 1 or 2, wherein after each of the connecting tube sleeves is fixed to a corresponding one of the tube sheets, one end of the connecting tube sleeve connected to the thin metal tube is located on an inner side of the tube sheet, and the thin metal tube is in internal socket connection or external socket connection with the connecting tube sleeve.

4. The efficient heat exchanger of claim 3, wherein a joint surface between the connecting tube sleeve and the thin metal tube that are in socket fit is a conical surface for guiding.

5. The efficient heat exchanger of claim 3, wherein an other end of the connecting tube sleeve comprises an outer flange, and the outer flange is stopped at an outer side of the tube sheet when the connecting tube sleeve is inserted into a corresponding one of the tube holes of the tube sheet.

6. The efficient heat exchanger of claim 1 or 2, wherein each of the heat exchange tubes is a helical tube with both inner and outer walls being extruded, and two ends of the helical tube are joints without being extruded helically.

7. The efficient heat exchanger of claim 1 or 2, wherein a plurality of partitions among the heat exchange tubes are installed in the shell, and the plurality of partitions guide a medium outside the heat exchange tubes and deliver the medium serpentinely.
